# FASCICULE DE BREVET EUROPEEN

(11) **EP 2 919 602 B1**
(45) Date de publication et mention de la délivrance du brevet: **13.09.2017**
(21) Numéro de dépôt: 13803136.4
(22) Date de dépôt: 13.11.2013
(51) Int. Cl.: A41C 3/14, A41C 3/10, A41C 5/00

(54) **BONNET DE SOUTIEN-GORGE**
BÜSTENHALTERKÖRBCHEN
BRA CUP

(30) Priorité: 19.11.2012 FR 1260944
(43) Date de publication de la demande: 23.09.2015
(73) Titulaire: Hanes Operations Europe SAS, 92500 Rueil-Malmaison (FR)
(72) Inventeur: TURLAN, Manon, F-71710 Marmagne (FR)
(74) Mandataire: Conroy, John
(86) Numéro de dépôt international: PCT/FR2013/052723
(87) Numéro de publication internationale: WO 2014/076414

(56) Documents cités:
- DE-U1-202012 003 154
- US-A- 2 516 129
- US-A- 2 826 202
- US-A- 6 101 630
- US-A1- 2008 139 085
- US-A1- 2010 267 312
- US-B1- 8 047 891

## Description

L'invention concerne un bonnet de soutien-gorge léger pour procurer un effet dit « push-up ».

On connait de nombreux bonnets qui sont conçus pour réaliser un soutien-gorge à effet dit « push-up », qui permet d'augmenter visuellement la taille de la poitrine d'une taille ou plus.

Le document FR-A-2972905 décrit et représente une structure de bonnet de soutien-gorge qui comporte une couche extérieure et une couche intérieure contrecollées renfermant entre elles une poche contenant un matériau malléable, en gel de silicone.

La poche est constituée de deux films polymériques fins qui sont scellés l'un à l'autre de façon étanche pour emprisonner le gel de silicone.

Bien que ce type de bonnet remplisse son rôle d'effet remontant de la poitrine, la présence du matériau de remplissage de la poche, du gel selon ce document, présente notamment l'inconvénient d'apporter un poids supplémentaire au soutien-gorge qui peut nuire au confort. Un autre bonnet selon le préambule de la revendication 1 est connu du document US 2008/0139085. L'invention vise notamment à palier ce problème en proposant un bonnet allégé permettant un effet dit « push-up ».

De plus, l'invention vise à proposer un bonnet de conception simplifiée qui ne nécessite pas de poche étanche pour retenir un matériau de remplissage.

Dans ce but, l'invention propose un bonnet selon la revendication 1. Ainsi, le bonnet selon l'invention est réalisé sans matériau de remplissage ajouté pour alléger le bonnet.

Selon une autre caractéristique, la peau intérieure et la peau extérieure sont réalisées en mousse polyuréthane.

Ce matériau présente notamment l'avantage de pouvoir adopter une forme hémisphérique plus ou moins déformable.

De plus, la peau intérieure et la peau extérieure sont réalisées par thermoformage.

Le thermoformage permet de réaliser des formes en relief de façon précise. Le thermoformage permet également de comprimer plus ou moins la mousse et/ou de la souder, ou coller à chaud à un autre matériau comme un textile ou une autre peau en polyuréthane par exemple.

Aussi, la peau extérieure présente une épaisseur comprise entre 8 et 15 millimètres avant thermoformage.

De même, la peau intérieure présente une épaisseur comprise entre 3 et 10 millimètres avant thermoformage.

Selon la revendication 1, la peau extérieure et la peau intérieure délimitent un premier bord périphérique et un second bord périphérique respectivement qui sont assemblés entre eux pour former la cavité.

Cette caractéristique permet de former un coussinet sans ajouter de matériau supplémentaire.

De plus, le premier bord périphérique et le second bord périphérique sont assemblés entre eux par thermoformage.

Selon un autre aspect, la peau intérieure et la peau extérieure sont chacune habillées d'un tissu externe.

Cette caractéristique permet d'accroître le confort et le toucher du bonnet.

L'invention concerne aussi un soutien-gorge comportant une paire de bonnets.

D'autres caractéristiques et avantages de l'invention apparaîtront à la lecture de la description détaillée qui suit pour la compréhension de laquelle on se reportera aux dessins annexés dans lesquels :
- la figure 1 est une vue de face, qui illustre la peau intérieure d'un bonnet selon l'invention;
- la figure 2 est une vue de dos, qui illustre la peau extérieure du bonnet de la figure 1 ;
- la figure 3 est une vue en section, selon l'axe 3-3 de la figure 1, qui illustre la cavité délimitée par la peau extérieure et la peau intérieure.

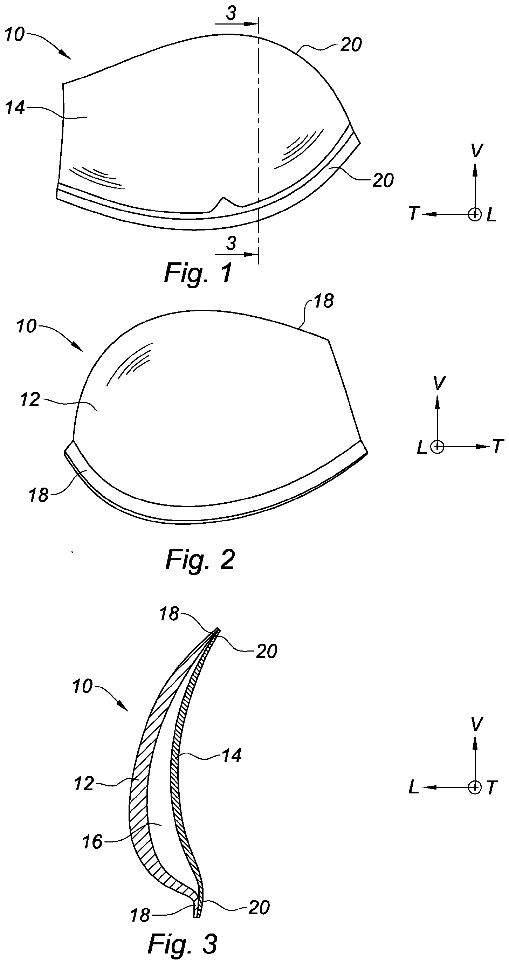

Dans la description et les revendications, on utilisera à titre non limitatif les expressions « supérieur » et « inférieur » en référence à la partie supérieure et à la partie inférieure respectivement des figures 1 à 3.

De plus, pour clarifier la description et les revendications, on adoptera à titre non limitatif la terminologie longitudinal, vertical et transversal en référence au trièdre L, V, T indiqué aux figures.

On a représenté à la figure 1 un bonnet 10 de soutien-gorge qui est constitué essentiellement par une première peau extérieure 12 et une seconde peau intérieure 14.

La peau extérieure 12 et la peau intérieure 14 présentent chacune une forme globalement convexe, bombée vers l'avant selon une direction longitudinale.

Toutefois, comme on peut le voir à la figure 3, la peau intérieure 14 est de convexité sensiblement moins profonde que la peau extérieure 12, c'est-à-dire que le rayon de courbure de la peau intérieure 14 est sensiblement plus faible que le rayon de courbure de la peau extérieure 12.

Cette caractéristique permet à la peau intérieure 14 et à la peau extérieure 12 de délimiter entre elles une cavité 16 remplie d'air qui permet d'augmenter visuellement la poitrine.

Avantageusement, la forme de chaque peau 12, 14 est conçue pour que le volume de la cavité 16 soit agencé en majeure partie dans une moitié inférieure du bonnet 10, de façon à favoriser l'effet dit « push-up » du bonnet 10 sur la poitrine de la personne qui le porte. De même, le volume de la cavité 16 est agencé de préférence en majeure partie latéralement, d'un côté externe du bonnet, qui correspond au côté du bras de la personne portant le bonnet, représenté du côté droit de la figure 2.

Selon un autre aspect, la peau intérieure 14 et à la peau extérieure 12 sont réalisées en mousse polyuréthane.

Toutefois, à titre non limitatif, chaque peau 12, 14 peut être réalisée en tout autre matériau permettant de donner une tenue globalement hémisphérique au bonnet, notamment en mousse légère, et plus particulièrement en mousse du type mousse d'éthylène vinyle acétate, ou en mousse de polyéthylène.

La peau intérieure 14 et la peau extérieure 12 sont réalisées par découpage et par moulage d'une plaque de mousse en thermoformage, chacune au cours d'une opération distincte.

La peau extérieure 12 et la peau intérieure 14 sont délimitées par un premier bord 18 périphérique et un second bord 20 périphérique respectivement qui sont assemblés entre eux pour former le bonnet 10 et la cavité 16.

Dans ce but, la peau extérieure 12 et la peau intérieure 14 sont assemblées au cours d'une opération d'assemblage qui consiste à superposer la peau extérieure 12 et la peau intérieure 14 et à souder le premier bord 18 et le second bord 20 entre eux par thermoformage, de façon à donner au bonnet 10 sa forme globalement hémisphérique.

A titre non limitatif, la peau extérieure 12 et la peau intérieure 14 peuvent être assemblées par tout autre moyen, notamment par collage à froid ou à chaud, ou au moyen d'une couture périphérique. Toutefois, selon l'invention, le premier bord 18 et le second bord 20 périphériques sont assemblés entre eux seulement en partie, la cavité 16 ne nécessitant pas d'être fermée de façon étanche.

Selon un autre aspect, la peau extérieure 12 est souple et peu extensible, de manière à conserver sa forme bombée et à peu ou pas se déformer lorsque le bonnet 10 est porté.

A cet effet, à titre indicatif, la peau extérieure 12 présente une épaisseur comprise entre huit et quinze millimètres avant thermoformage, et une épaisseur comprise entre un millimètre et quinze millimètres après thermoformage, l'épaisseur la plus faible étant disposée à la périphérie du bonnet 10 de préférence.

De même, la peau intérieure 14 est souple et peu extensible, mais la peau intérieure 14 est sensiblement plus souple que la peau extérieure.

A cet effet, la peau intérieure 14 présente une épaisseur comprise entre trois et dix millimètres avant thermoformage, et une épaisseur comprise entre un demi et sept millimètres après thermoformage, l'épaisseur la plus faible étant disposée à la périphérie du bonnet 10 de préférence, par exemple une épaisseur comprise entre un demi et un millimètre.

Enfin, la peau intérieure 14 et la peau extérieure 12 sont chacune habillées d'un tissu 22 externe, notamment pour apporter du confort et par soucis esthétique.

Le bonnet 10 selon l'invention permet de former un coussinet amplificateur de poitrine sans moyen d'étanchéité rapporté, ce qui simplifie la réalisation du bonnet 10.

De plus, le volume de la cavité 16 est uniquement rempli d'air, ce qui permet de réaliser un bonnet 10 léger à porter.

L'invention permet de réaliser un soutien-gorge (non représenté) comportant une paire de bonnet 10 tels que décrits précédemment, qui procure un effet amplificateur dit « push-up », en limitant l'augmentation du poids par rapport à un soutien-gorge classique sans moyen amplificateur ajouté.

Selon une variante de réalisation de l'invention, chaque bonnet est obtenu par injection d'une mousse dans un moule, comme une mousse en éthylène vinyle acétate, connue sous le sigle EVA, ou en silicone, ou encore en polyuréthane.

## Revendications

1. Bonnet (10) de soutien-gorge comportant une première peau extérieure (12) et une seconde peau intérieure (14) qui sont assemblées entre elles de façon à former un bonnet (10) de forme globalement hémisphérique, **caractérisé en ce que** chaque peau (12, 14) présente une forme globalement convexe, la peau intérieure (14) étant de convexité sensiblement moins profonde que la peau extérieure (12), de sorte que lesdites peaux (12, 14) délimitent entre elles une cavité (16) non étanche remplie d'air qui permet d'augmenter visuellement la poitrine, **caractérisé en ce que** le volume de la cavité est agencé en majeure partie dans une moitié inférieure du bonnet 10, et la peau extérieure (12) et la peau intérieure (14) sont délimitées par un premier bord (18) périphérique et un second bord (20) périphérique respectivement qui sont assemblés entre eux pour former la cavité (16), dans laquelle le bord (18) périphérique et le second bord (20) périphérique sont assemblés entre eux seulement en partie.

2. Bonnet (10) de soutien-gorge selon la revendication 1, **caractérisé en ce que** la peau intérieure (14) et la peau extérieure (12) sont réalisées en mousse polyuréthane.

3. Bonnet (10) de soutien-gorge selon l'une quelconque des revendications précédentes, **caractérisé en ce que** la peau intérieure (14) et la peau extérieure (12) sont réalisées par thermoformage.

4. Bonnet (10) de soutien-gorge selon la revendication 3, **caractérisé en ce que** la peau extérieure (12) présente une épaisseur comprise entre 8 et 15 millimètres avant thermoformage.

5. Bonnet (10) de soutien-gorge selon l'une quelconque des revendications 3 ou 4, **caractérisé en ce que** la peau intérieure (14) présente une épaisseur comprise entre 3 et 10 millimètres avant thermoformage.

6. Bonnet (10) de soutien-gorge selon la revendication 1, **caractérisé en ce que** le premier bord périphérique (18) et le second bord périphérique (20) sont assemblés entre eux par thermoformage.

7. Bonnet (10) de soutien-gorge selon l'une quelconque des revendications précédentes, **caractérisé en ce que** la peau intérieure (14) et la peau extérieure (12) sont chacune habillées d'un
tissu externe.

8. Soutien-gorge comportant une paire de bonnets (10) selon l'une quelconque des revendications précédentes.

## Patentansprüche

1. Büstenhalterkörbchen (10), das eine erste, äußere Haut (12) und eine zweite, innere Haut (14) aufweist, die zur Bildung eines allgemein halbkugelförmigen Körbchens (10) miteinander verbunden sind, **dadurch gekennzeichnet, dass** jede Haut (12, 14) eine allgemein konvexe Form hat, wobei die Konvexität der inneren Haut (14) wesentlich weniger tief als die der äußeren Haut (12) ist, so dass die Häute (12, 14) zwischen sich einen nicht dichten, luftgefüllten Hohlraum (16) begrenzen, der den Busen optisch vergrößern kann, **dadurch gekennzeichnet, dass** das Volumen des Hohlraums größtenteils in einer unteren Hälfte des Körbchens (10) angeordnet ist und die äußere Haut (12) und die innere Haut (14) durch einen ersten Umfangsrand (18) bzw. einen zweiten Umfangsrand (20) begrenzt sind, die zum Bilden des Hohlraums (16) miteinander verbunden sind, in dem der Umfangsrand (18) und der zweite Umfangsrand (20) nur teilweise miteinander verbunden sind.

2. Büstenhalterkörbchen (10) nach Anspruch 1, **dadurch gekennzeichnet, dass** die innere Haut (14) und die äußere Haut (12) aus Polyurethanschaum realisiert sind.

3. Büstenhalterkörbchen (10) nach einem der vorhergehenden Ansprüche, **dadurch gekennzeichnet, dass** die innere Haut (14) und die äußere Haut (12) durch Thermoformen realisiert sind.

4. Büstenhalterkörbchen (10) nach Anspruch 3, **dadurch gekennzeichnet, dass** die äußere Haut (12) vor dem Thermoformen eine Dicke zwischen 8 und 15 Millimetern aufweist.

5. Büstenhalterkörbchen (10) nach einem der Ansprüche 3 oder 4, **dadurch gekennzeichnet, dass** die innere Haut (14) vor dem Thermoformen eine Dicke zwischen 3 und 10 Millimetern aufweist.

6. Büstenhalterkörbchen (10) nach Anspruch 1, **dadurch gekennzeichnet, dass** der erste Umfangsrand (18) und der zweite Umfangsrand (20) durch Thermoformen miteinander verbunden sind.

7. Büstenhalterkörbchen (10) nach einem der vorhergehenden Ansprüche, **dadurch gekennzeichnet, dass** die innere Haut (14) und die äußere Haut (12) jeweils mit einem äußeren Gewebe verkleidet sind.

8. Büstenhalter, der ein Paar Körbchen (10) nach einem der vorhergehenden Ansprüche aufweist.

## Claims

1. Bra cup (10) comprising a first, outer skin (12) and a second, inner skin (14) which are joined to one another to form a cup (10) of generally hemispherical shape, **characterized in that** each skin (12, 14) has a generally convex shape, the convexity of the inner skin (14) being substantially less deep than the outer skin (12) such that said skins (12, 14) delimit between them a non-airtight air-filled cavity (16) providing a visual boost to the bust,
**characterized in that** the majority of the volume of the cavity is arranged in a lower half of the cup (10), and the outer skin (12) and the inner skin (14) are delimited by a first peripheral edge (18) and a second peripheral edge (20) respectively, which are joined to one another to form the cavity (16), in which the peripheral edge (18) and the second peripheral edge (20) are only partially joined to one another.

2. Bra cup (10) according to Claim 1, **characterized in that** the inner skin (14) and the outer skin (12) are made of polyurethane foam.

3. Bra cup (10) according to either one of the preceding claims, **characterized in that** the inner skin (14) and the outer skin (12) are made by thermoforming.

4. Bra cup (10) according to Claim 3, **characterized in that** the outer skin (12) has a thickness of between 8 and 15 millimetres prior to thermoforming.

5. Bra cup (10) according to either one of Claims 3 and 4, **characterized in that** the inner skin (14) has a thickness of between 3 and 10 millimetres prior to thermoforming.

6. Bra cup (10) according to Claim 1, **characterized in that** the first peripheral edge (18) and the second peripheral edge (20) are joined to one another by thermoforming.

7. Bra cup (10) according to any one of the preceding claims, **characterized in that** the inner skin (14) and the outer skin (12) are each provided with an outer fabric.

8. Bra comprising a pair of cups (10) according to any one of the preceding claims.
